# EUROPÄISCHE PATENTSCHRIFT

(11) **EP 0 850 793 B1**
(45) Veröffentlichungstag und Bekanntmachung des Hinweises auf die Patenterteilung: **11.07.2001**
(21) Anmeldenummer: 97122239.3
(22) Anmeldetag: 17.12.1997
(51) Int. Cl.: B60J 7/185

(54) **Verschlussvorrichtung für ein Cabriolet-Verdeck**
Locking device for convertible soft top
Système de verrouillage pour capote de cabriolet

(30) Priorität: 30.12.1996 DE 29622540 U
(43) Veröffentlichungstag der Anmeldung: 01.07.1998
(60) Teilanmeldung: 00117987.8
(73) Patentinhaber: Wilhelm Karmann GmbH, D-49084 Osnabrück (DE)
(72) Erfinder: Schmitz, Hermann, 49716 Meppen (DE)
(74) Vertreter: Busse & Busse Patentanwälte

(56) Entgegenhaltungen:
- EP-A- 0 492 006
- BE-A- 352 581
- DE-C- 3 940 839
- DE-U- 9 407 380

## Beschreibung

Die Erfindung bezieht sich auf eine Verschlußvorrichtung für ein an einem Karosserierahmenteil lösbar festlegbares Cabriolet-Verdeck nach dem Oberbegriff des Anspruches 1.

Verschlußvorrichtungen der eingangs genannten Arten finden Verwendung, um Cabriolet-Verdecke an Windschutzscheibenrahmen von Kraftfahrzeugen festzulegen. Dabei sind Verschlußelemente in den seitlichen Bereichen des Cabriolet-Verdeckes bzw. des Windschutzscheibenrahmens angeordnet. Mittig hingegen ist ein Betätigungsorgan angeordnet, das entweder über einen motorischen Antrieb oder von Hand um eine im wesentlichen vertikale Achse drehbar ist und über ein Antriebsgestänge, das die Drehbewegung des zentralen Betätigungsorgans in eine Zug- oder Schubbewegung zur Betätigung der Verschlußelemente umsetzt, mit den seitlichen Verschlußelementen verbunden ist. Am Übergang zwischen dem Antriebsgestänge und den schwenkbaren Verschlußelementen muß eine erneute Kraftumlenkung stattfinden, um die im wesentlichen Translation des Antriebsgestänges in die Schwenkbewegung der Riegelorgane umsetzen zu können.

Die EP 0 492 006 A1 offenbart eine derartige Verschlußvorrichtung, bei der im Übergangsbereich zwischen dem Zug-Schub-Gestänge und dem schwenkbaren Riegelorgan eine doppelte Kulissenführung ausgebildet ist, die einerseits die Endbereiche des Antriebsgestänges in eine Führungsbahn lenkt und andererseits die Schwenkachse des Riegelorgans in Abhängigkeit von dessen Schwenkwinkel entlang einer Kulissenbahn verfährt, so daß diese Schwenkachse nicht ortsfest gegenüber dem Riegelorgan ist, sondern sich im Laufe des Einschwenkens des Riegelorgans in die Verschlußposition in Richtung der Spitze von dessen Hakenende verschiebt.

Mit dieser Anordnung gehen die Nachteile einher, daß einerseits in ausgeschwenkter Position der das Riegelorgan ausbildende Haken weit nach außen vorsteht, da hier die Schwenkachse des Hakens in der am weitesten der Hakenspitze abgewandten Position liegt. Dadurch greift der Haken sehr tief in ein das Widerlager tragendes Aufnahmeteil ein, das dementsprechend eine sehr hohe Bauhöhe aufweisen muß, was sowohl bei Anordnung des Widerlagers am Verdeck als auch am Windschutzscheibenrahmen unerwünscht ist.Zudem bildet die doppelte Kulissenführung eine baulich komplizierte, nicht frei von Spiel herstellbare Konstruktion aus, die einen massiven Bauteilrahmen erfordert.

Wegen der Drehbewegung des zentralen Betätigungsorgans leistet das Zug-Schub-Gestänge zudem keine reine gradlinige Translationsbewegung, sondern es ist eine seitwärts gerichtete Komponente in dieser Bewegung enthalten, die bei der gezeigten Doppelkulissenführung im Sinne eines Verkantens hinderlich ist.

Der Erfindung liegt das Problem zugrunde, eine Verschlußvorrichtung der eingangs genannten Art dahingehend zu verbessern, daß der Bauaufwand und die Ausmaße der Verschlußelemente bzw. Aufnahmeteile für das Widerlager verringert werden und gleichzeitig Betriebssicherheit und Bedienungskomfort der Verschlußvorrichtung verbessert werden.

Die Erfindung löst dieses Problem mit den Merkmalen des Anspruches 1. Hinsichtlich weiterer vorteilhafter Ausgestaltungen wird auf die Ansprüche 2 bis 23 verwiesen.

Durch die ortsfeste Lage der Schwenkachse während des Verschwenkens des Hakenteils ist ein besonders weites Heraustreten des Hakenteils aus dem Verdeck bzw. aus dem Karosserierahmenteil vermieden, die Verletzungsgefahr ist daher gemindert, außerdem kann die Bauhöhe des das Widerlager aufnehmenden Aufnahmeteils geringer gehalten werden. Durch die Anordnung eines kraftumlenkenden Übertragungshebels ist die aufzubringende Kraft zur Betätigung des Riegelorgans vermindert, so daß der Bedienkomfort unter Zuhilfenahme des Hebelprinzips gesteigert ist.

Um die Seitwärtskomponente der Bewegung des Antriebsgestänges abfangen zu können, ist besonders vorteilhaft die Anlenkung des Antriebsgestänges an dem Übertragungshebel über ein Kugelgelenk ausgeführt. Ein Verkanten ist dadurch ausgeschlossen. Eine Kulissenführung ist bei dieser Ausführung entbehrlich.

Es ist auch möglich, eine einzige Kulissenführung im Bereich der Kraftumlenkung zwischen Antriebsgestänge und Riegelorgan anzuordnen, wobei ebenfalls der Übertragungshebel zur Vergrößerung des Drehmomentes zur Bewirkung der Schwenkbewegung des Hakenteils Verwendung findet und dabei durch die Ausbildung des Hebels die aufzubringende Kraft verringert ist. Die hier gezeigten einzelnen Kulissenführungen weisen eine geringe Bauhöhe und einen geringen Bauaufwand auf.

Wenn die Kulissenführung das dem Antriebsgestänge abgewandte Ende des Übertragungshebels führt, wird ein großer Teil der Niederholbewegung des Cabriolet-Verdecks durch die Kulissenführung aufgenommen, so daß das bewegte Hakenteil klein gehalten werden kann, da es nur einen geringen Fangweg auszuführen hat und die eigentliche Niederholung des Verdeckes durch die Translation des in der Kulissenführung geführten und während dieser Translation nicht mehr schwenkbaren Hakenteils erfolgt.

Bei einer solchen Ausbildung ist vorteilhaft das Antriebsgestänge wiederum über ein Kugelgelenk mit dem Übertragungshebel verbunden.

Durch die Kulissenführung wird vorteilhaft die Schwenkbewegung des Riegelorgans außerhalb eines Endbereiches verhindert, so daß die Schwenkachse des Riegelorgans auch hier während des Verschwenkens eine ortsfeste Lage einnimmt.

Vorteilhaft ist bei allen Ausführungen die Länge des Antriebsgestänges verstellbar, so daß Fertigungstoleranzen ausgeglichen werden können und das Riegelorgan in jedem Fall in der Lage ist, das Cabriolet-Verdeck unter hoher Spannung an dem Karosserierahmenteil zu sichern.

Weitere Mittel zur Zentrierung des Verdecks bezüglich der Fahrzeuglängsachse sind vorteilhaft neben den Verschlußelementen montiert, um auf diese Weise das durch das Eingreifen von Riegelorganen an sich in Längsrichtung des Fahrzeugs erstreckenden Widerlagern verbleibende Spiel zu kompensieren.

Durch eine Aufnahmeaussparung in dem Hakenende zur arretierenden Lage an das Widerlager ist erreicht, daß die in dem Umgebungsbereich der Aussparung extrem zusammengepreßte Dichtung zwischen Cabriolet-Verdeck und Karosserierahmenteil sich ein Stück weit entspannt bei Erreichen der Endlage, so daß ein Herausführen des Schwenkhakens aus dieser arretierten Position einen sehr hohen Kraftaufwand bedeuten würde und damit diese Verschlußstellung eine zusätzlich Sicherung erfährt.

Für Verschlußvorrichtungen mit einem als zentralen Handgriff ausgebildeten Betätigungsorgan ist durch eine Blockierung des Handgriffes in seiner die Verschlußelemente in Schließstellung haltenden Ausgangslage eine zusätzliche Sicherung dieser Ausgangslage erreicht, so daß ein ungewolltes oder unbefugtes Öffnen des Verdeckes vermieden ist und erst durch Betätigung eines Verriegelungselementes eine Entriegelung der Verschlußposition möglich ist.

Vorteilhaft ist eine Blockierung nicht nur auf ein Schwenken des Handgriffes um eine horizontale Achse, sondern auch auf dessen Drehbarkeit um eine vertikale Achse bezogen, so daß sich eine doppelte Sicherung ergibt.

Weitere Vorteile und Einzelheiten ergeben sich aus der Zeichnung sowie der nachfolgenden Beschreibung mehrerer Ausführungsbeispiele des Gegenstandes der Erfindung.

In der Zeichnung zeigen:
- Fig. 1: eine schaubildliche Ansicht des in dem Cabriolet-Verdeck angeordneten Teils der Verschlußvorrichtung,

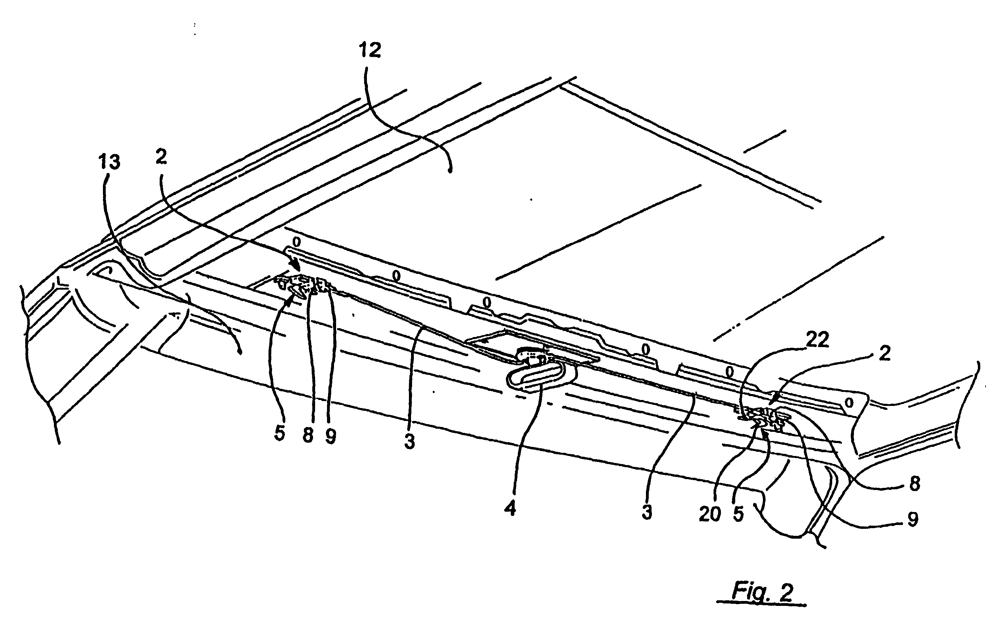

- Fig. 2: das Teil nach Fig. 1 in eingebautem Zustand im Cabriolet-Verdeck,
- Fig. 3: eine Altemativausführung einer Verschlußvorrichtung mit einer Kulissenführung in geschlossenem Zustand,
- Fig. 4: die Ausführung nach Fig. 3 in offenem Zustand,
- Fig. 5: eine schaubildliche Rückansicht der Ausführung nach Fig. 3 in geschlossenem Zustand,
- Fig. 6: eine ähnliche Ansicht zu Fig. 5 bei geöffneter Verschlußvorrichtung,
- Fig. 7: die Ausführung nach Fig. 3 in Ansicht schräg von vorne in geschlossenem Zustand,
- Fig. 8: eine ähnliche Ansicht zu Fig. 7 bei geöffneter Verschlußvorrichtung,
- Fig. 9: eine weitere Altemativausbildung einer Verschlußvorrichtung in geschlossenem Zustand,
- Fig. 10: eine ähnliche Ansicht zu Fig. 9 in teilweise geöffnetem Zustand,
- Fig. 11: eine ähnliche Ansicht zu Fig. 10 in geöffnetem Zustand der Verschlußvorrichtung,
- Fig. 12: die Ausführung nach Fig. 9 in geschlossenem Zustand,
- Fig. 13: die Ausführung nach Fig. 9 in teilweise geöffnetem Zustand,

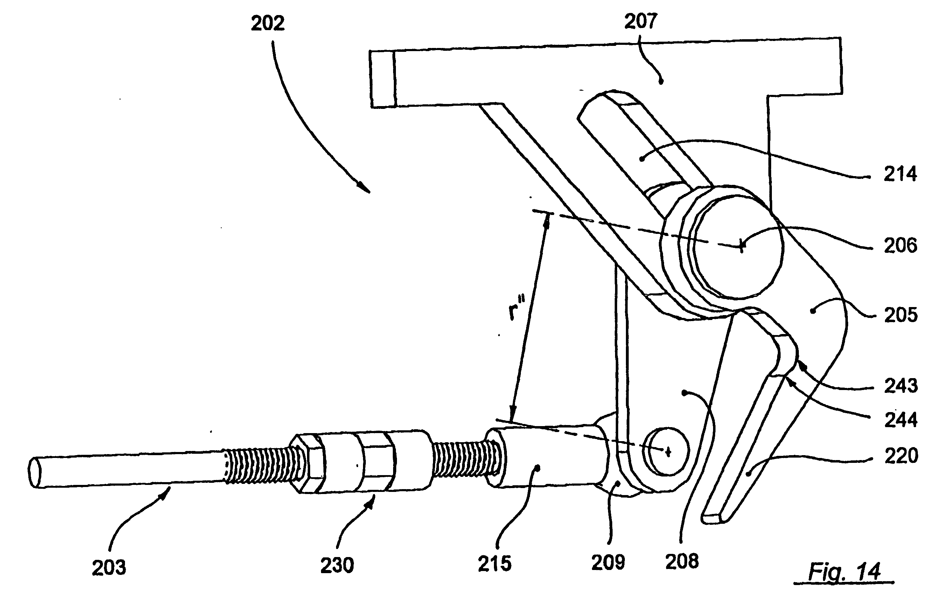

- Fig. 14: die Ausführung nach Fig. 9 in geöffnetem Zustand,

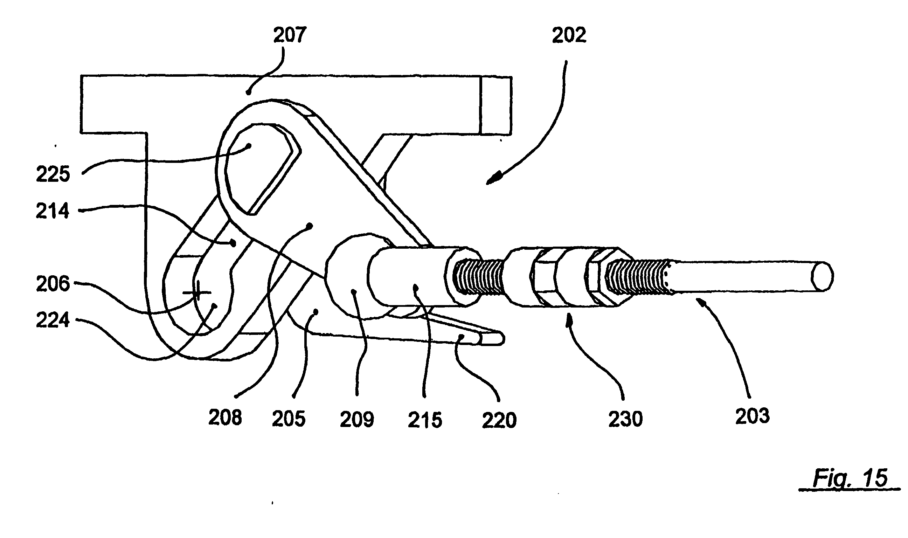

- Fig. 15: eine schaubildliche Rückansicht der Ausführung nach Fig. 9 in geschlossenem Zustand,
- Fig. 16: eine ähnliche Ansicht zu Fig. 15 in teilweise geöffnetem Zustand,

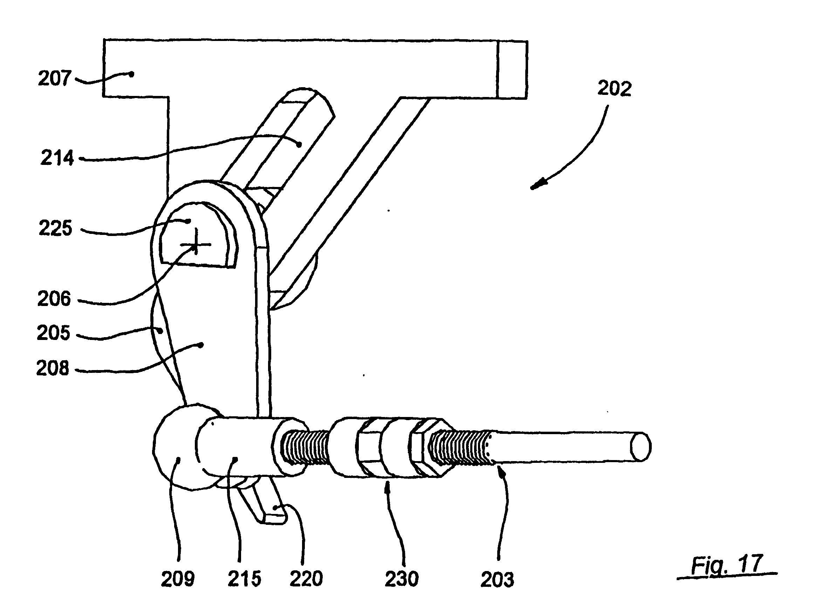

- Fig. 17: eine ähnliche Ansicht zu Fig. 15 in geöffnetem Zustand,

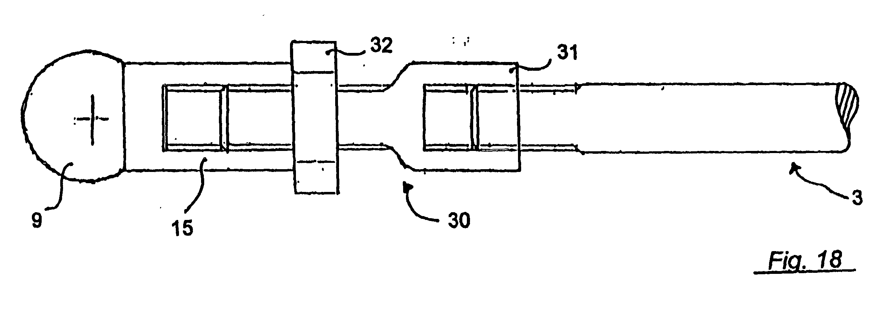

- Fig. 18: den Endbereich des Antriebsgestänges mit der abschließenden Kugelpfanne,

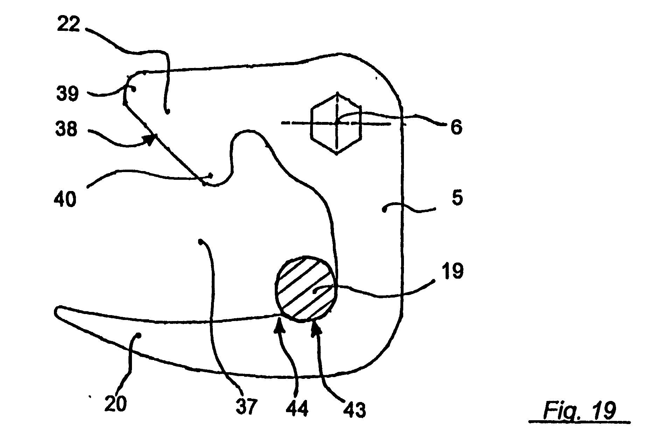

- Fig. 19: ein Hakenteil mit Distanznocken,
- Fig. 20: das Hakenteil nach Fig. 19 in unterschiedlichen Eingriffsphasen und Schwenkwinkeln,
- Fig. 21: das Hakenteil nach Fig. 20 in geschlossenem Zustand des Cabriolet-Verdecks,
- Fig. 22: eine ähnliche Ansicht zu Fig. 21 mit eingezeichneter Bewegungskurve des Hakenendes,

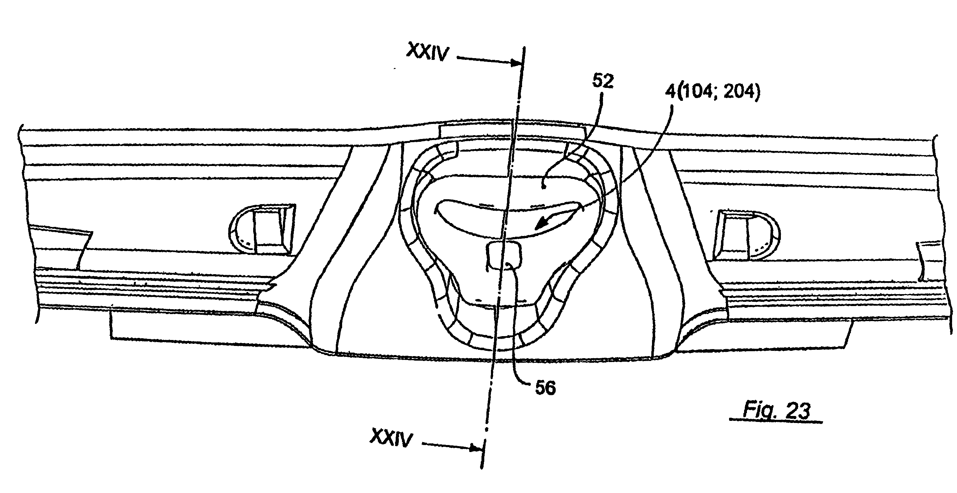

- Fig. 23: eine Draufsicht auf ein zentrales Betätigungsorgan,

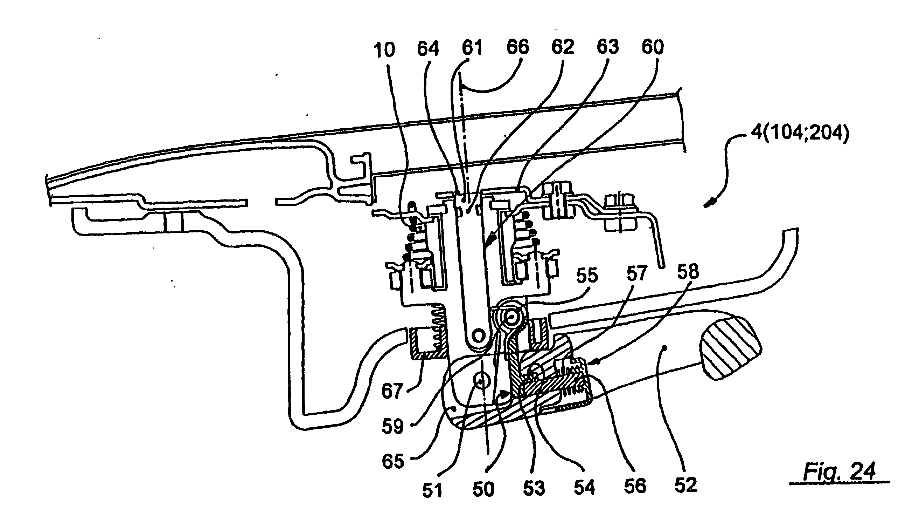

- Fig. 24: einen Schnitt entlang der Linie XXIV-XXIV in Fig. 23,
- Fig. 25: eine ähnliche Ansicht zu Fig. 24 mit aufgeschwenktem Handgriff,

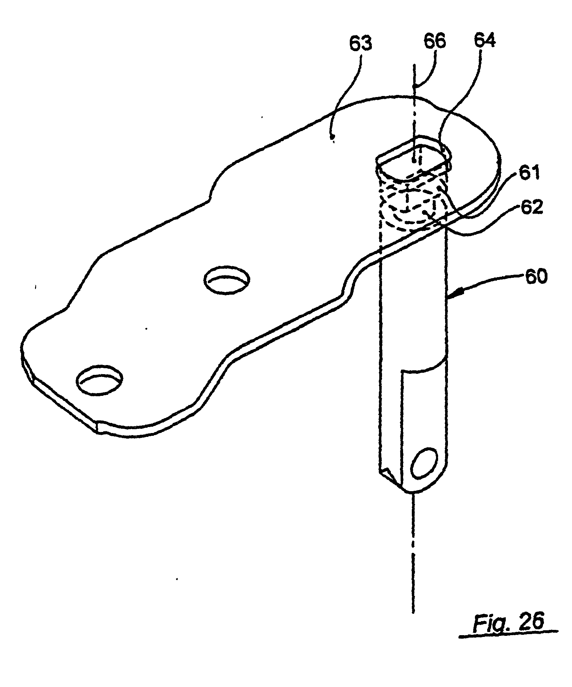

- Fig. 26: eine Explosionszeichnung des das Blockierungsmittel sperrenden Gegenstücks,

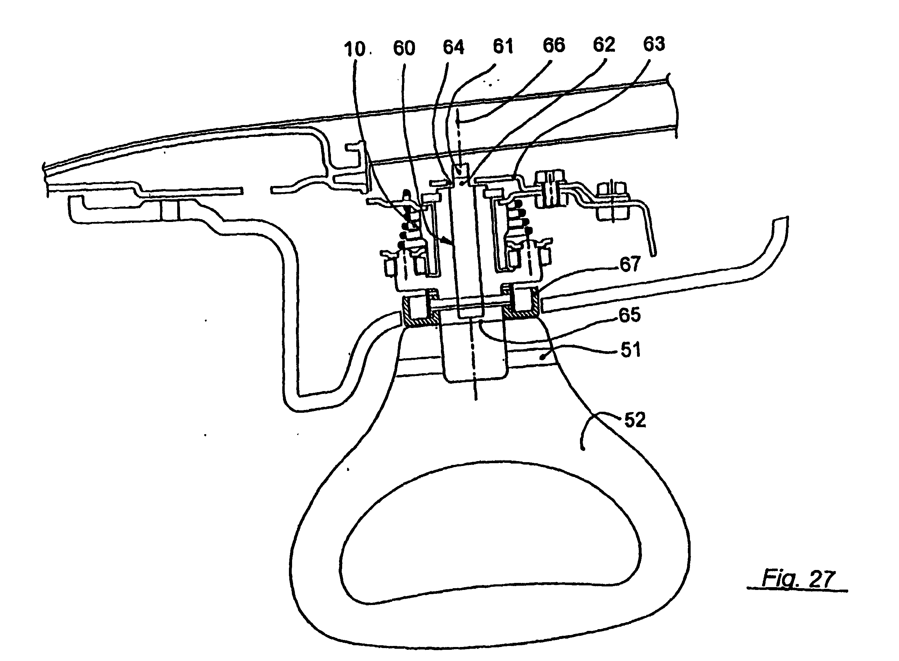

- Fig. 27: eine ähnliche Ansicht zu Fig. 26 mit um die vertikale Achse verdrehtem Handgriff.

Im einzelnen weist die Verschlußvorrichtung 1 zwei seitliche Verschlußelemente 2,102,202 auf, die über ein Antriebsgestänge 3,103,203 mit einem zentralen Betätigungsorgan 4,104,204 verbunden sind.

Die Verschlußelemente 2,102,202 weisen ein als Hakenteil ausgebildetes Riegelorgan 5,105,205 auf, das um eine im wesentlichen horizontal und parallel zur Fahrzeuglängsachse verlaufende Schwenkachse 6,106,206 schwenkbar ist, wobei die Schwenkachse 6,106,206 ihre Lage während des Verschwenkens des Riegelorgans 5,105,205 bezüglich diesem nicht ändert, also gegenüber diesem, wie auch gegenüber dem Lagerungsteil 7,107,207, ortsfest angeordnet ist. Dabei ist zwischen dem Hakenteil 5,105,205 und dem Antriebsgestänge 3,103,203 ein kraftumlenkender Übertragungshebel 8,108,208 angeordnet, über den die im wesentlichen der Fahrzeugquerachse folgende Zug- oder Schubbewegung des Antriebsgestänges 3,103,203 in eine Schwenkbewegung des Hakenteils 5,105,205 umgesetzt wird.

Der Übertragungshebel 8,108,208 ist als gegenüber dem Hakenteil 5,105,205 gesondertes Bauteil ausgebildet und entweder fest mit der Schwenkachse 6,206 verbunden oder mit Abstand zur Schwenkachse 106 an dem Hakenteil 105 angelenkt und liegt in einer zur Schwenkebene des Riegelorgans 5,105,205 parallelen Ebene.

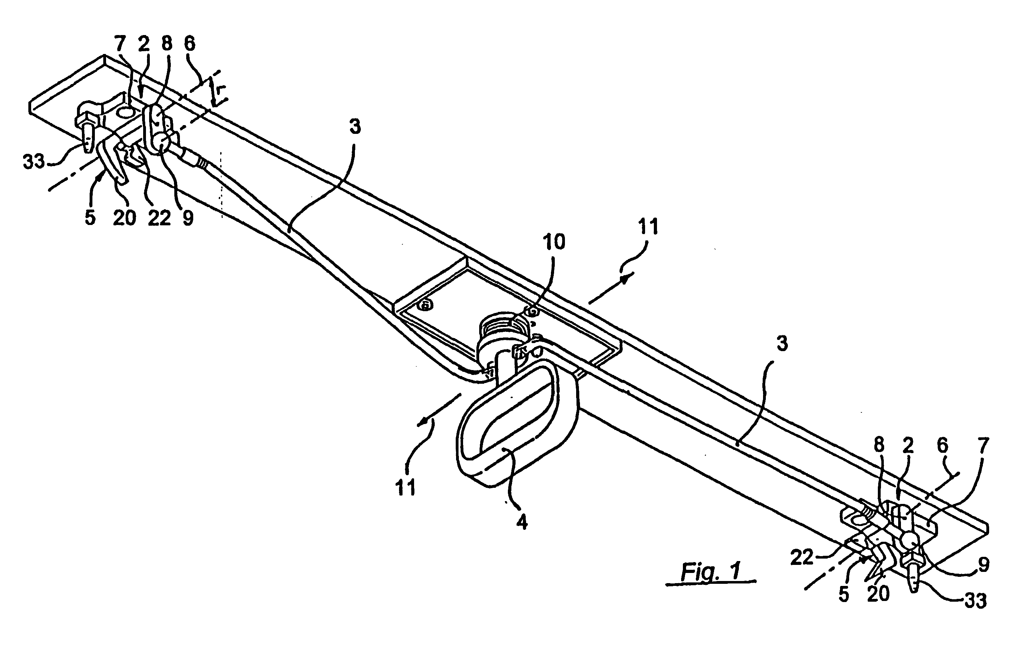

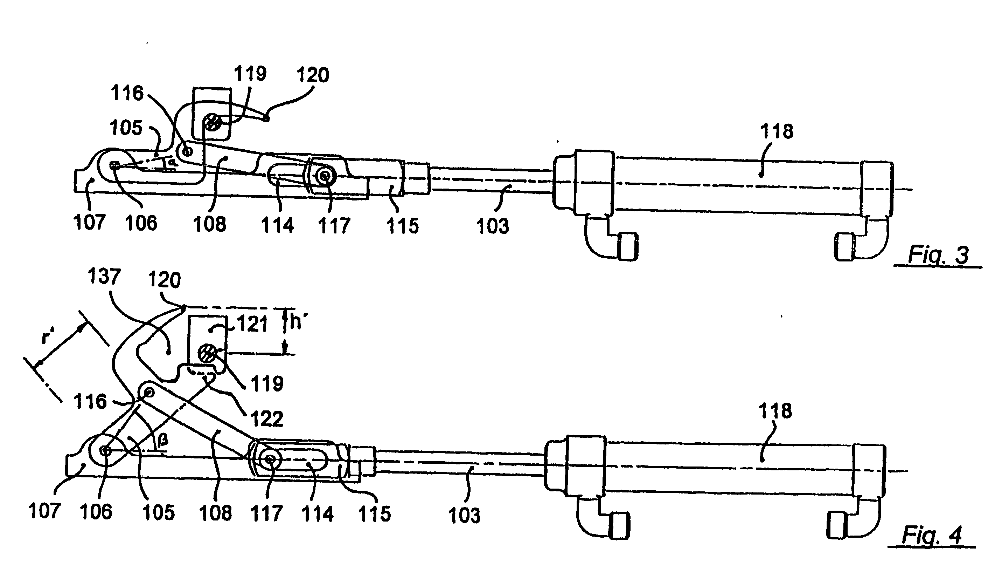

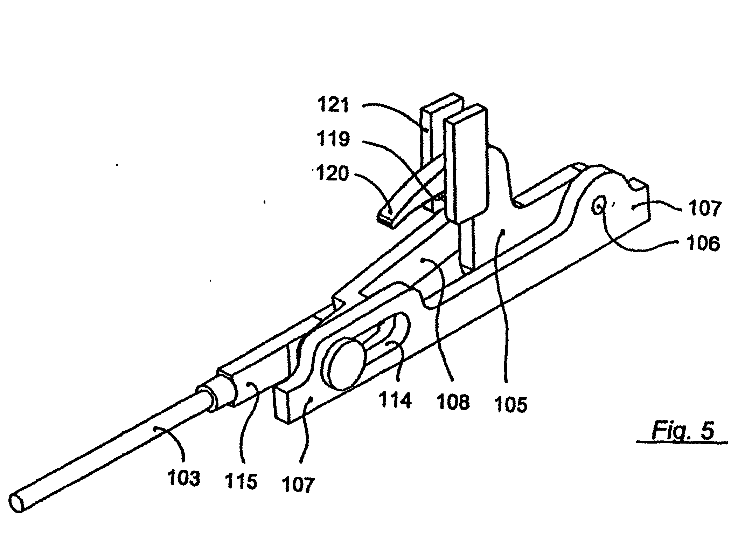

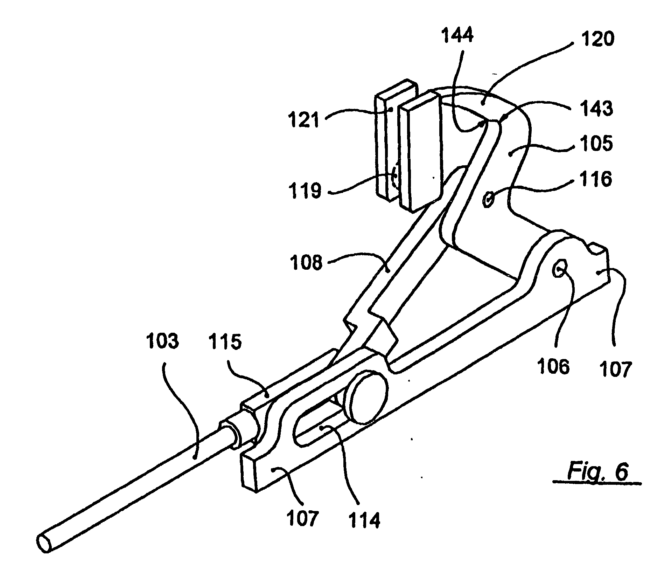

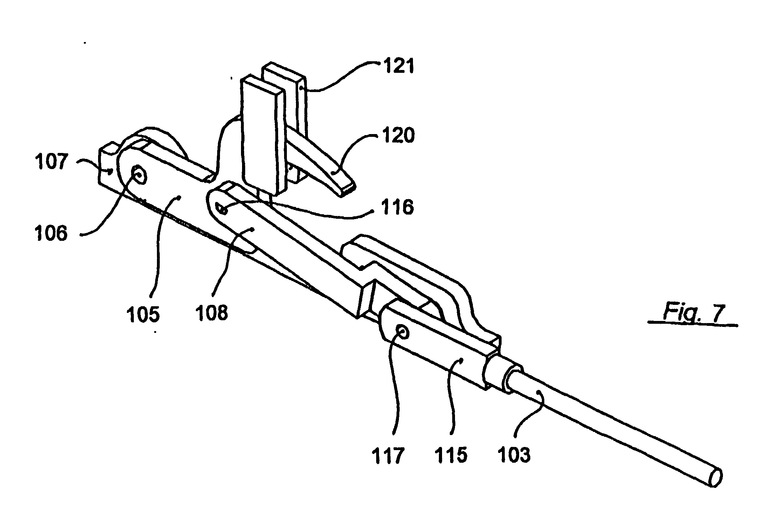

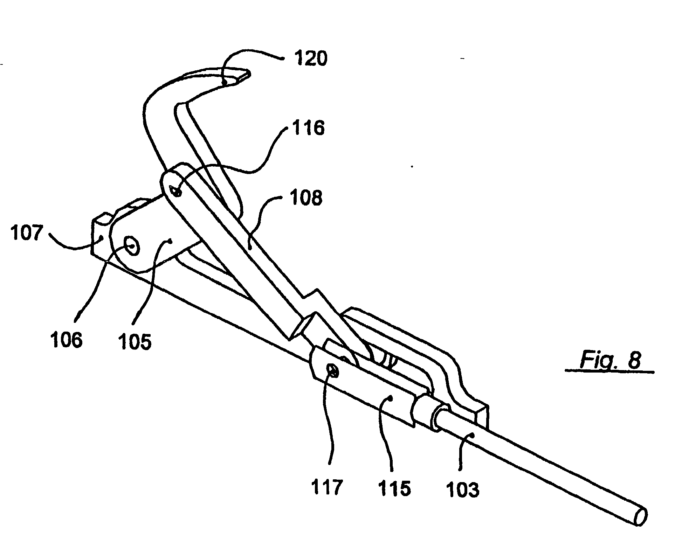

In jedem Fall ist durch den Übertragungshebel 8,108,208 eine Erleichterung des Verschwenkens des Hakenteils 5,105,205 dadurch erreicht, daß für das hierfür aufzubringende Drehmoment ein Hebelweg r,r',r" ausgebildet ist, der hinreichend groß ist, um die Kraft zur Aufbringung des Drehmomentes gering halten zu können.
a) Im ersten Ausführungsbeispiel ist der Übertragungshebel 8 entweder einstückig mit dem die Schwenkachse 6 bildenden Bauteil ausgebildet, oder er ist mit diesem zumindest fest verbunden, ebenso wie das Riegelorgan 5 fest mit der Schwenkachse 6 verbunden ist. Der Übertragungshebel 8 weist dabei radial auswärts von der Schwenkachse 6 und ist an seinem der Schwenkachse 6 abgewandten Ende mit dem Antriebsgestänge 3 verbunden. Das Antriebsgestänge 3 greift dabei über ein Kugelgelenk 9 an dem Übertragungshebel 8 an.
   Diese Anlenkung über ein Kugelgelenk 9 weist den besonderen Vorteil auf, daß die Abweichungen der Bewegung des Antriebsgestänges 3 von einer gradlinigen Bewegung durch dieses Kugelgelenk 9 abgefangen werden können, ohne zu einem Verkanten der Schwenkachse 6 zu führen. Insbesondere bei einer Anordnung des Antriebsgestänges 3 an dem zentralen Betätigungsorgan 4 gemäß Fig. 1, bei dem eine gegen eine Spiralfeder 10 ausgeführte Drehung des Betätigungsorgans 4 um eine vertikale Achse 66 das Antriebsgestänge 3 betätigt, findet im ersten Sektor der Drehung des Betätigungsorgans 4 in erster Linie eine Bewegung des Antriebsgestänges 3 in Richtung der Pfeile 11, also der Fahrzeuglängsachse folgend, statt. Die auswärts gerichtete Schubbewegung des Antriebsgestänges 3 zum Öffnen der Riegelorgane 5 gewinnt erst mit zunehmendem Drehwinkel des Betätigungsorganes 4 und bleibt stets von einem Restanteil der Drehbewegung überlagert. Durch den Einsatz des Kugelgelenkes 9 kann die Drehachse 6 in dem Lagerungsteil 7 mit geringstem Spiel eingesetzt werden, da die Bewegung des Übertragungshebels 8 bereits vollständig in bzw. parallel zu der Schwenkebene des Hakenteils 5 liegt, so daß ein Verkanten der Schwenkachse 6 bei Betätigung des Übertragungshebels 8 ausgeschlossen ist.
   Im Ausführungsbeispiel sind die Verschlußelemente 2 sowie das Antriebsgestänge 3 und das Betätigungsorgan 4 im Cabriolet-Verdeck 12 angeordnet, wohingegen sich die Widerlager 19 im Windschutzscheibenrahmen 13 befinden. Eine Umkehrung dieser Anordnung ist grundsätzlich möglich, weist jedoch bei Handbedienung das Problem auf, daß das als Handgriff ausgebildete Betätigungsorgan 4 sehr viel Platz beansprucht und daher besser im Verdeck 12 unterzubringen ist, wo es nicht in Kollision mit den Sonnenblenden oder dem Rückspiegel gerät.
b) Im zweiten Ausführungsbeispiel ist zwischen dem Riegelorgan 105 und dem Antriebsgestänge 103 eine Kulissenführung 114 ausgebildet, in der der die Kraft umlenkende Übertragungshebel 108 geführt ist. Der Übertragungshebel 108 verbindet dabei das Endstück 115 des Antriebsgestänges 103 mit dem als Hakenteil ausgebildeten Riegelorgan 105 und ist an diesem an einer Anlenkachse 116 angelenkt, wobei die Anlenkachse 116 in einem Abstand r' zur Schwenkachse 106 des Riegelorgans 105 angeordnet ist. Das der Anlenkachse 116 abgewandte Ende des Übertragungshebels 108 bildet eine Führungsachse 117 aus, die in der Kulissenführung 114 geführt ist.
   Um auch aus der Verschlußstellung des Hakenteils 105 heraus (Fig. 3) einen Hebelarm nutzen zu können, ist die gedachte Verbindungslinie zwischen der Schwenkachse 106 und der Anlenkachse 116 gegenüber der gedachten Verbindungslinie zwischen der Schwenkachse 106 und der Führungsachse 117 um einen Öffnungswinkel α versetzt, der gleichsinnig zu dem Schwenkwinkel β des Riegelorgans 105 gelegen ist.
   Die Kulissenführung 114 ist dabei im wesentlichen parallel - oder in einem spitzen Öffnungswinkel entsprechend dem Verlauf des Windschutzscheibenrahmens 13 - zur Fahrzeugquerachse, und damit rechtwinklig zur Schwenkachse 106, ausgebildet, wobei das auswärts gerichtete Endstück 115 des Antriebsgestänges 103 in dieser Kulissenführung 114 geführt ist und somit eine auswärts gerichtete Zug- oder Schubbewegung senkrecht zur Schwenkachse 106 des Riegelorgans 105 vollführt.
   Jegliches Verkanten wird vermieden, wenn jedem Verschlußelement 102 ein einzelner Antrieb 118 zugeordnet ist, beispielsweise ein Hydraulikzylinder. In der Regel wird jedoch auch hier ein zentrales Betätigungsorgan 4 verwendet, so daß ein gewisses Spiel in der Kulissenführung 114 vorhanden sein muß, um ein seitliches Verkanten des Antriebsgestänges 103 darin zu verhindern.
   Um von der geschlossenen Position (Fig. 3, Fig. 5, Fig. 7) in die offene Position (Fig. 4, Fig. 6, Fig. 8) zu gelangen, muß das Riegelorgan 5 nur um einen Schwenkwinkel β, der deutlich kleiner ist als 90°, verschwenkt werden, wobei das Hakenende 120 zum Lösen der Verbindung mit dem Widerlager 119 keinen hohen Translationsweg h' in vertikaler Richtung aufweist, so daß die Bauhöhe des das Widerlager 119 aufnehmenden Aufnahmeteils 121 gering gehalten werden kann. Dieses kann zusätzlich unterstützt werden, wenn an dem Riegelorgan 105 ein Distanznocken 122 angeformt ist, wie in der Fig. 4 eingezeichnet ist.
c) In einem dritten Ausführungsbeispiel ist der Übertragungshebel 208 analog zum Übertragungshebel 8 im ersten Ausführungsbeispiel starr an dem Riegelorgan 205 angeordnet und anderenends mit dem Antriebsgestänge 203 gelenkig verbunden. Diese Anlenkung des Antriebsgestänges 203 an dem Übertragungshebel 208 kann ebenfalls, wie im ersten Ausführungsbeispiel, über ein Kugelgelenk 209 erfolgen, um damit seitwärts gerichtete Komponenten der Bewegung des Antriebsgestänges 203 zu kompensieren.

Im Unterschied zum ersten Ausführungsbeispiel ist jedoch das Riegelorgan 205 hier in einer Kulissenführung 214 geführt, wobei die Kulissenführung 214 einen Endbereich 224 ausbildet, in dem ein Verschwenken des Riegelorganes 5 um die Schwenkachse 206 möglich ist, wohingegen in dem sonstigen Bereich der Kulissenführung 214 das Riegelorgan derartig ausgeführt ist, daß nur eine reine Translationsbewegung in der Kulissenführung 214 möglich ist, eine Schwenkbewegung dabei verhindert wird.

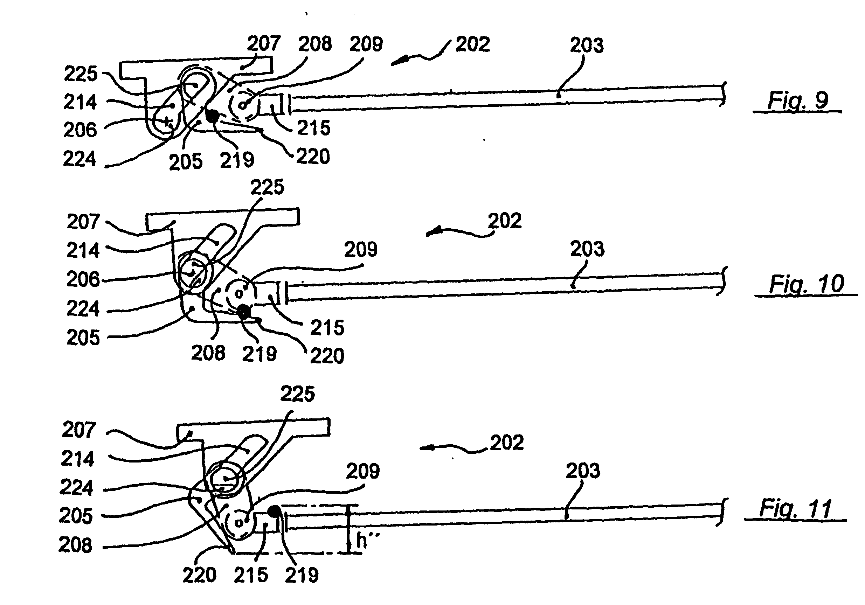

Dazu ist in Schwenkposition (Fig. 11) des Riegelorgans 205 dessen Schwenkachse 206 von einem in Längsrichtung zumindest einseitig abgeflachten Achskörper 225 gebildet, der in der Kulissenführung 214 derartig geführt ist, daß allein im Bereich der Aufweitung 224 der Achskörper 225, der entweder einstückig mit dem Riegelorgan 205 ausgebildet oder zumindest mit diesem fest verbunden ist, in der Führung 214 geschwenkt werden kann, wohingegen bis auf diesen Aufweitungsbereich 224 die gesamte Kulissenführung 214 eine den Achskörper 225 zwangsführende und sein Verschwenken hindernde Führung ausbildet. Der Durchmesser der Aufweitung 224, die eine im wesentlichen runde Umrißgestalt aufweist, ist dabei mindestens so groß wie der Durchmesser des Achskörpers 225 in nicht abgeflachten Bereichen.

Der Bewegungsablauf zum Öffnen eines Cabriolet-Verdeckes 212, an dem das Lagerungsteil 207 angeordnet sein kann, ist dabei so ausgeführt, daß zunächst der abgeflachte Achskörper in einer rein translatorischen Bewegung von seiner oberen Position in der Kulissenführung 214 durch eine Schub- oder Zugbewegung des Antriebsgestänges 203 parallel verschoben werden, wobei diese Verschiebung in der Kulissenführung 214 seitwärts und abwärts gerichtet ist. Dabei bewegt sich das Hakenteil 205 derart gegenüber dem Widerlager 219, daß dieses seitwärts auf dem Hakenende 220 abgleitet, wobei die Eigenspannung des Cabriolet-Verdeckes 212 für die Anlage des Widerlagers 219 an dem Hakenende 220 in dieser Phase der Bewegung sorgt, da bei Lösen des Verschlußelementes 202 die Eigenspannung automatisch eine aufwärts gerichtete Bewegung des Endes des Cabriolet-Verdeckes 212 bewirkt.

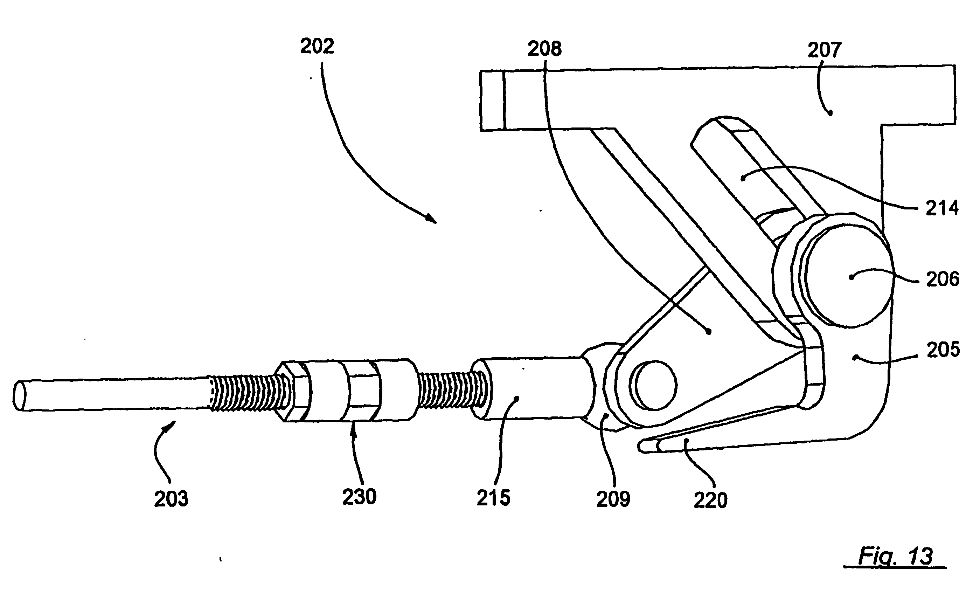

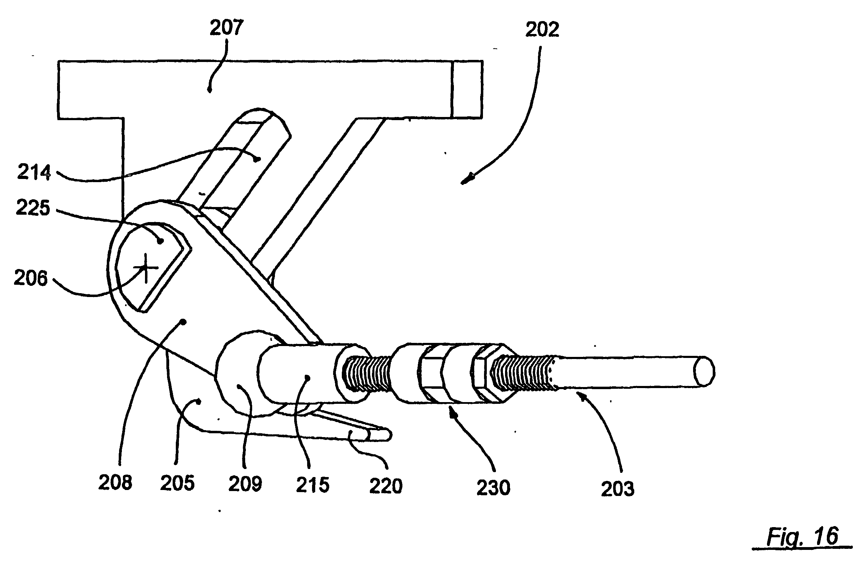

Nach Durchlaufen der Kulissenführung 214 gelangt der Achskörper 225 in den aufgeweiteten Bereich 224 (Fig. 10, Fig. 13, Fig. 16), in dem er schwenkbar ist. Eine weitere auswärts gerichtete Druckbewegung des Antriebsgestänges 203 führt dann also nicht zu einer Weiterverschiebung des Achskörpers 225 - und damit des Riegelorgans 205 - in der Kulissenführung 214, sondern verschwenkt das Riegelorgan 205, das mit seinem Achskörper 225 in den aufgeweiteten Bereich 224 eingreift und um die Schwenkachse 206 schwenkbar ist. Zur Bewirkung dieser Schwenkbewegung des Riegelorgans 205 ist das Antriebsgestänge 203 analog wie im ersten Ausführungsbeispiel an dem Übertragungshebel 208 angelenkt, wofür wieder vorteilhaft ein Kugelgelenk 209 Verwendung findet.

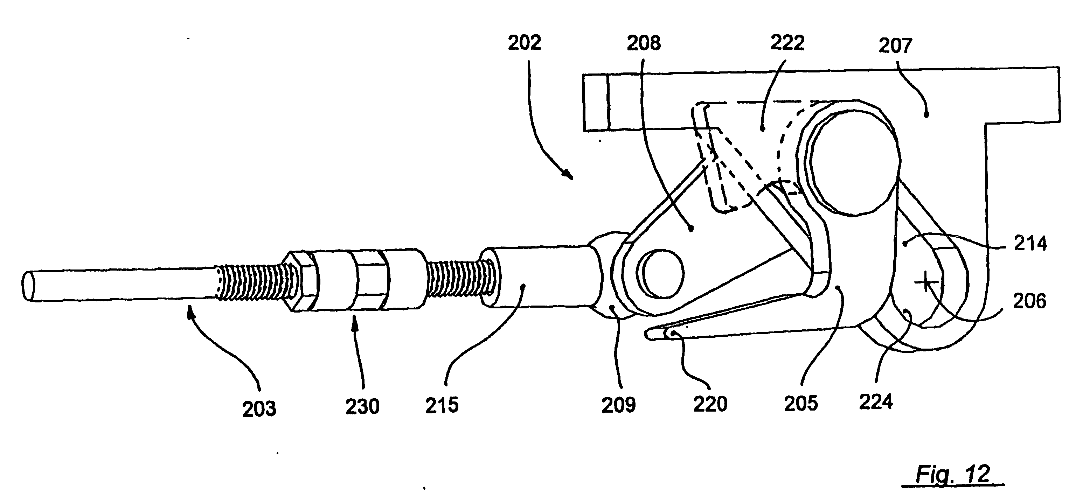

Auch hier ist aufgrund der Überlagerung der Translations- und Rotationsbewegung des Riegelorgans 205 die Eindringtiefe h" des Hakenteils 205 in das das Widerlager 219 tragende Aufnahmeteil 221 gering, so daß dessen Bauhöhe klein gehalten werden kann. Um ein zu tiefes Eindringen des Hakenendes 220 in dieses Aufnahmeteil 221 zu vermeiden, kann auch hier, wie in Fig. 12 gezeichnet, zusätzlich ein unten näher beschriebener Distanznocken 222 vorgesehen sein.

Bei allen Ausführungsbeispielen ist zum Ausgleichen von Fertigungstoleranzen besonders vorteilhaft die Länge des Antriebsgestänges 3,103,203 verstellbar.

Hierzu ist am Endstück 15,115,215 des als Zug-Druck-Stange ausgebildeten Antriebsgestänges 3,103,203 ein Längenverstellmechanismus 30,130,230 angeordnet. Dieser weist eine Verbindungsmuffe 31 auf, in deren Innengewinde, das als Linksgewinde ausgebildet ist, die Schubstange 3 über ein Außengewinde aufgenommen ist. Die Verbindungsmuffe 31 ist insgesamt in dem mit der Kugelpfanne des Kugelgelenks 9 verbundenen und ebenfalls mit einem Innengewinde, allerdings einem Rechtsgwinde, versehenen Endstück 15 aufgenommen, wobei die relative Lage der Verbindungsmuffe 31 zu dem Endstück 15 über die Kontermutter 32 festlegbar ist.

Über einen solchen oder ähnlichen Längenverstellmechanismus 30,130,230 können Fertigungstoleranzen in der Weise ausgeglichen werden, daß immer eine Verschwenkbarkeit der Riegelorgane 5,105,205 zwischen ihren Extrempositionen gesichert ist. Die zum Halten des Cabriolet-Verdeckes 12 auf dem Windschutzscheibenrahmen 13 erforderliche Spannung wird daher immer erreicht.

Neben den Verschlußelementen 2,102,202 können zusätzliche Zentrierungsmittel 33 an dem Cabriolet-Verdeck 12 bzw. dem Windschutzscheibenrahmen 13 angeordnet sein, die bei der hier gezeigten Anordnung der Schwenkachsen vorzugsweise die Zentrierung des Cabriolet-Verdeckes 12 entlang der Fahrzeuglängsachse sichern sollen, da das als umgriffener Riegel ausgebildete Widerlager 19,119,219 eine gewisse Längsausdehnung aufweist, die größer ist als die Breite des Riegelorgans 5,105,205, so daß dieses entlang dem Widerlager 19,119,219 parallel zur Fahrzeuglängsachse mit gewissem Spiel behaftet ist. Durch geeignete Zentrierungsmittel 33, beispielsweise Zapfen, die in als Kegel gebildete Einlaufkanäle 34 im Bereich des Aufnahmeteils 21,121,221 des Widerlagers 19,119,219 eingreifen, läßt sich diese Bewegung des Cabriolet-Verdeckes 12 entlang der Längsachse des Fahrzeuges verhindern.

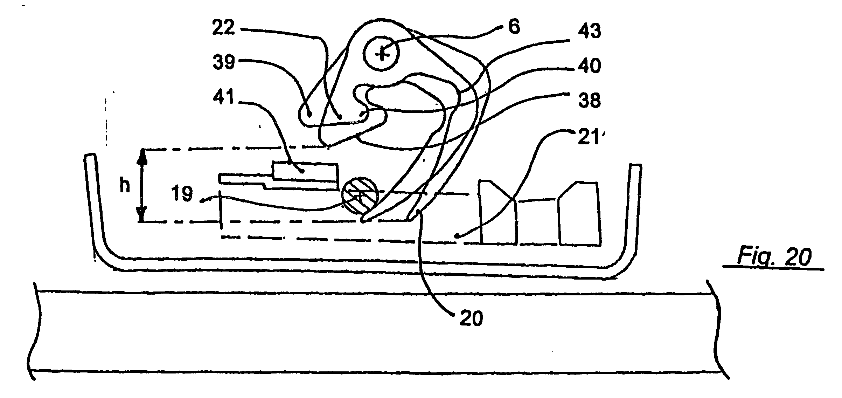

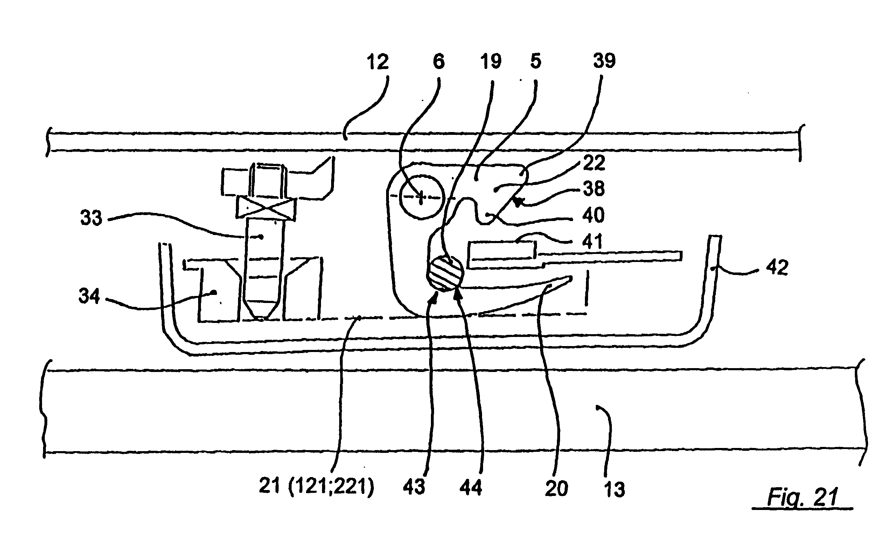

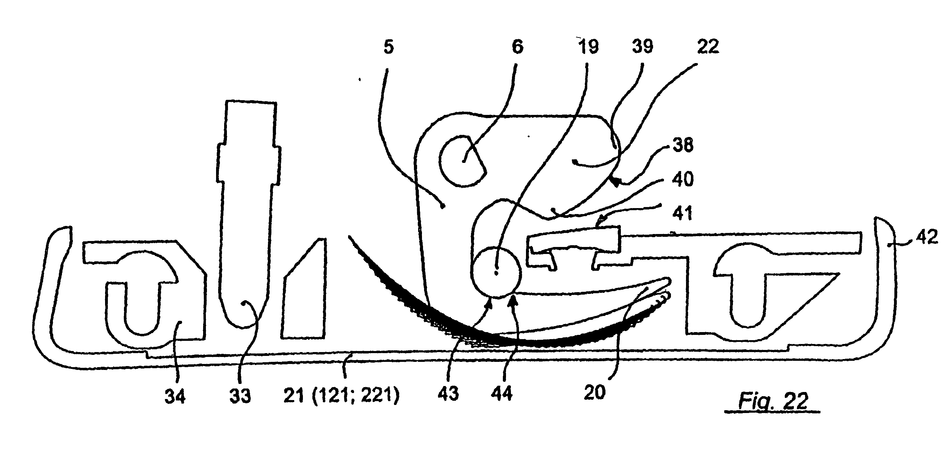

Die Fig. 20 bis 22 zeigen die Ausbildung einer Aufnahmeeinheit 21 eines Widerlagers 19, das in die Aufnahmeeinheit 21 eingebaut ist, so daß ein das Widerlager 19 umgreifendes Hakenteil 5,105,205 in die Aufnahmeeinheit 21,121,221 mit seinem Hakenende 20,120,220 eindringt und in dieser derart verschwenkt wird, daß in Verschlußstellung das Widerlager 19,119,219 von dem Hakenende 20,120,220 untergriffen ist, wodurch das Cabriolet-Verdeck 12 eine vertikal abwärts gerichtete Zugkraft erfährt.

Das Hakenende 20,120,220 nimmt in Verschlußstellung eine im wesentlichen waagerechte Stellung ein und sichert seine Lage gegenüber dem Widerlager 19,119,219 durch eine Aufnahmeaussparung 43,143,243 in die das Widerlager 19,119,219 bei vollständigem Einschwenken des Verschlußhakens 5,105,205 gleitet. Dies Aufnahmeaussparung 43,143,243 ist von einem dieser gegenüber erhöhten Randbereich 44,144,244 begrenzt, so daß ein selbständiges Herausbewegen des Widerlagers 19 aus der Verschlußstellung mit einem großen Kraftaufwand verbunden ist, da hierzu nicht alleine ein seitliches Verschwenken des Riegelorgans 5,105,205 erforderlich ist, sondern zusätzlich ein vertikales Abwärtsziehen, um die Kante 44,144,244 zu überwinden.

Dieses Abwärtsbewegen des Cabriolet-Verdeckes 12 erfolgt jedoch gegen dessen Zugkraft aus seiner Eigenspannung, so daß der Kraftaufwand hierfür erheblich ist und somit ein unbeabsichtigtes Öffnen des Cabriolet-Verdeckes 12 zuverlässig vermieden ist.

Eine solche Aufnahmeaussparung 43,143,243 ist an beliebigen Arten von Riegelorganen anbringbar, wodurch die Verschlußstellung in jedem Fall eine Arretierung erfährt.

Die Ausbildung eines Riegelorgans 5 mit einem seine Eindringtiefe h in ein Aufnahmeteil 21 begrenzenden Distanznocken 22 ist im Ausführungsbeispiel an Hakenteilen 5 ausgebildet, die um eine im wesentlichen parallel zur Fahrzeuglängsachse verlaufende horizontale Schwenkachse schwenkbar sind. Auch andere Anordnungen von Riegelorganen 5 können mit einem solchen Distanznocken versehen sein, in jedem Fall ergibt sich bei einer sehr kleinen Bauhöhe des Aufnahmeteils 21 großer Fangweg für das Riegelorgan 5 über dessen Hakenende 20, so daß ein zuverlässiges Greifen und Niederholen des Cabriolet-Verdeckes 12 trotz der sehr geringen Eindringtiefe der Hakenenden 20 ermöglicht ist.

Das Betätigungsorgan 4 zur Betätigung der seitlich an dem Cabriolet-Verdeck 12 angeordneten Verschlußelemente 2,102,202 weist ein Verriegelungselement 50 auf, das den Handgriff 4 in einer zumindest die Verschlußelemente 2 in Verschlußstellung haltenden Ausgangslage blockiert. Dabei ist der Handgriff 52 um eine horizontale Achse 51 verschwenkbar, nimmt in Ausgangsposition eine im wesentlichen horizontale, zum Fahrzeugheck gerichtete Lage ein, wobei das Aufschwenken des Handgriffs 4 durch das Verriegelungselement 50 blockiert ist.

Das Verriegelungselement 50 weist eine ein Widerlager ausbildende Anformung 53 auf, die eine Hinterschneidung 54 des Betätigungsgriffes 52 untergreift und daher das Verschwenken des Betätigungsgriffes 52 verhindert. Um dieses Untergreifen zu sichern, ist das Verriegelungselement 50 über eine Feder 55 derart vorgespannt, daß es in Eingriffsstellung mit der Hinterschneidung 54 gedrückt wird.

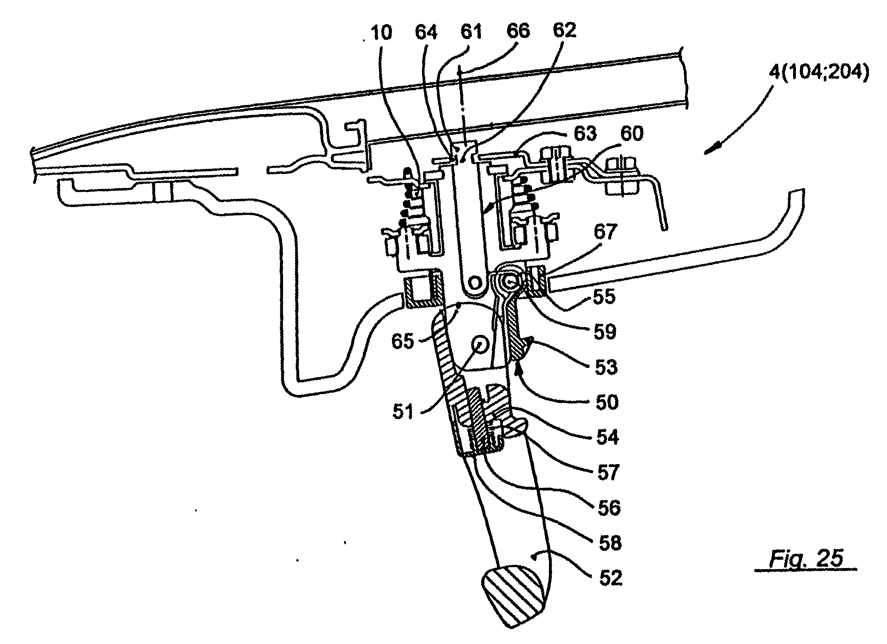

Um das Verriegelungselement 50 außer Eingriff mit der Hinterschneidung 54 des Handgriffes 52 zu bewegen, ist ein Betätigungselement 56 an dem Handgriff 52 angeordnet, das über eine Feder 57 in dem Handgriff 52 gelagert ist und in seinem in Fahrzeuglängsrichtung nach hinten weisenden Ende eine Drucktaste 58 aufweist und anderenends in Eingriff mit dem Verriegelungselement 50 steht. Bei Eindrücken des Betätigungselementes 56 entgegen der Federkraft 57 mittels eines Drucks auf die Drucktaste 58, die im wesentlichen in Fahrtrichtung des Fahrzeugs zu drücken ist, wird das Betätigungselement derart gegen das Verriegelungselement 50 gedrückt, daß dieses gegen die Kraft seiner Feder 55 nach vorne um eine Achse 59 verschwenkt wird, wodurch das Widerlager 53 außer Eingriff mit der Hinterschneidung 54 des Handgriffes 52 bewegt und ein Abwärtsschwenken des Handgriffes 52 dadurch ermöglicht wird (Fig. 25).

Da die Bewegung des Antriebsgestänges 3,103,203 der oben beschriebenen Ausführungsbeispiele ein Verschwenken des Handgriffes 52 um eine vertikale Achse erfordert, ist zusätzlich sicherzustellen, daß dieses Verschwenken des Handgriffes 52 um die vertikale Achse erst bei voll ausgeschwenktem Handgriff 52 um die horizontale Achse 51 erfolgen kann. Dazu ist ein die Drehbewegung des Handgriffes 52 um die vertikale Achse über einen Teilbereich des Schwenkwinkels um die horizontale Achse 51 sperrendes Blockierungselement 60 vorgesehen.

Dieses Blockierungselement 60 ist als vertikal beweglicher Stift ausgebildet, der in seinem oberen Bereich ein bezüglich der vertikalen Schwenkachse nicht isotropes, beispielsweise in Draufsicht rechteckiges, Endstück 61 ausbildet, an das sich vertikal abwärts gerichtet ein in Draufsicht kreisrundes und damit bezüglich einer Drehung um die vertikale Achse isotropes Halsstück 62 anschließt. Dieser Stift ist zum Eingriff in ein Widerlager 63 vorgesehen, wobei das Widerlager eine an die Umrißgestalt des Endstücks angepaßte Ausnehmung 64 aufweist, in die das Endstück 61 des Stiftes bei teilweise ausgeschwenktem Handgriff 52 eingreift. Durch die Übereinstimmung der Form des Endstückes 61 und der Ausnehmung 64 ist ein Verdrehen der beiden Teile gegeneinander unmöglich. Das Widerlager 63 ist fest mit dem Cabriolet-Verdeck bzw. dem Windschutzscheibenrahmen 13 verbunden.

Erst wenn der Stift 60 seine höchste vertikale Position erreicht, greift das Halsstück 62 in die Ausnehmung 64 ein, in dem es frei um die vertikale Achse 66 drehbar ist, so daß ein Verschwenken des Betätigungsorgans 4 um die vertikale Achse möglich ist. Zur Steuerung der vertikalen Bewegung des das Blockierungsmittel 60 ausbildenden Stiftes wird dieser von einem Teilbereich 65 des Handgriffes 52 oder einer Anformung nach Art eines Nockens gesteuert, so daß in Abhängigkeit des Schwenkwinkels des Handgriffs 52 um die horizontale Achse 51 die Vertikalbewegung des Stiftes 60 gesteuert werden kann und dieser bei maximal abwärts geschwenktem Handgriff 52 seine obere Vertikalposition erreicht. Vorzugsweise ist dazu das vordere Ende 65 des Handgriffes 52 als Führungsbahn für den Stift 60 ausgebildet, der von dieser Bahn 65 aufwärts verschoben wird und bei voll ausgeschwenktem Handgriff 52 seine obere Vertikalposition erreicht (Fig. 25).

Dadurch ist sowohl durch das Verriegelungselement 50 das unbeabsichtigte oder unbefugte Verschwenken des Handgriffes 52 blockiert als auch durch das Blockierungsmittels 60 ein Verschwenken des Handgriffes um die vertikale Achse 66, und damit ein Betätigen der Verschlußelemente 2 außerhalb der voll aufgeschwenkten Position des Handgriffes 52, unterbunden. Diese doppelte Sicherung bewirkt eine Komfortsteigerung, da zum Öffnen der Verschlußvorrichtung der Handgriff 52 nicht über einen Totpunkt hinweg geschwenkt werden muß oder gegen eine starke Federkraft angearbeitet werden muß, sondern das Lösen des Verriegelungselementes 50, was mit leichten Daumendruck geschehen kann, ein einfaches Aufschwenken des Handgriffes 52 um die horizontale Achse 51 ermöglicht, wobei das anschließende Verschwenken um die vertikale Ache 66 durch das Sicherungsmittel 60 ohne die Gefahr des Verkantens ausgeführt werden kann. Auch ein Zurückklappen des Handgriffs 52 mit der Gefahr des Einklemmens der Finger ist dadurch weitestgehend vermieden.

Zusätzlich ist das Zurückklappen des Handgriffs 52 über eine federnd gelagerte und vertikal verschiebliche Platte 67 abgefedert, die in horizontaler Lage des Handgriffs 52 flächig an diesem anliegt.

## Patentansprüche

1. Verschlußvorrichtung für ein an einem Karosserierahmenteil (13) lösbar festlegbares Cabriolet-Verdeck (12) von insbesondere Kraftfahrzeugen, mit zumindest zwei dem Cabriolet-Verdeck (12) bzw. dem Karosserierahmenteil (13) zugeordneten seitlichen Verschlußelementen (2;102;202) bzw. Widerlagern (19;119;219), wobei die Verschlußelemente (2;102;202) jeweils zumindest ein mit dem Widerlager (19;119;219) in Eingriffs- bzw. Außereingriffsstellung bewegbares und als schwenkbares Hakenteil ausgebildetes Riegelorgan (5;105;205) umfassen und über ein Antriebsgestänge (3;103;203) mit einem Betätigungsorgan (4;104;204) verbunden sind, wobei die Riegelorgane (5;105;205) jeweils um eine in geschlossener Verdeckstellung im wesentlichen horizontal und parallel zur Fahrzeuglängsachse verlaufende Schwenkachse (6;106;206) schwenkbar sind, **dadurch gekennzeichnet,** daß die Schwenkachse (6;106;206) während des Verschwenkens des Hakenteils (5;105;205) diesem gegenüber ortsfest gehalten ist und zwischen dem Hakenteil und dem Antriebsgestänge (3;103;203) ein kraftumlenkender Übertragungshebel (8;108;208) angeordnet ist.

2. Verschlußvorrichtung nach Anspruch 1, **dadurch gekennzeichnet** daß der Übertragungshebel (8;208) als fest mit der Schwenkachse (6;206) verbundener und von dieser radial auswärts weisender Schwenkhebel ausgebildet ist, an dem das Antriebsgestänge (3;203) mittels eines Kugelgelenks (9;209) angreift.

3. Verschlußvorrichtung nach einem der Ansprüche 1 oder 2, **dadurch gekennzeichnet,** daß im Bereich der Kraftumlenkung zwischen Antriebsgestänge (103;203) und Riegelorgan (105;205) eine einzige Kulissenführung (114;214) vorgesehen ist und daß in der Kulissenführung (114;214) zumindest der Übertragungshebel (108;208) geführt ist.

4. Verschlußvorrichtung nach Anspruch 3, **dadurch gekennzeichnet,** daß der Übertragungshebel (108) an dem Riegelorgan (105) an einer Anlenkachse (116) schwenkbar gelagert ist, wobei die Anlenkachse (116) mit Abstand zur Schwenkachse (106) des Riegelorgans (105) angeordnet ist und wobei der Übertragungshebel (108) anderenends über eine Führungsachse (117) in der Kulissenführung (114) geführt ist.

5. Verschlußvorrichtung nach Anspruch 4, **dadurch gekennzeichnet,** daß die gedachte Verbindungslinie zwischen der Schwenkachse (106) und der Anlenkachse (116) gegenüber der von der Schwenkachse (106) und der Führungsachse (117) des Übertragungshebels (108) gebildeten gedachten Linie einen Öffnungswinkel (α) ausbildet, der gleichsinnig zu dem Schwenkwinkel (β) des Riegelorgans (105) gelegen ist.

6. Verschlußvorrichtung nach Anspruch 5, **dadurch gekennzeichnet,** daß die Kulissenführung (114) im wesentlichen parallel zur Fahrzeugquerachse ausgebildet ist und das auswärts gerichtete Endstück (115) des Antriebsgestänges (103) in dieser Kulissenführung (114) geführt ist.

7. Verschlußvorrichtung nach Anspruch 3, **dadurch gekennzeichnet,** daß der Übertragungshebel (208) starr an dem Riegelorgan (205) angeordnet und anderenends an dem Antriebsgestänge (203) angelenkt ist.

8. Verschlußvorrichtung nach Anspruch 7, **dadurch gekennzeichnet,** daß zur Anlenkung des Antriebsgestänges (203) an dem Übertragungshebel (208) ein Kugelgelenk (209) vorgesehen ist.

9. Verschlußvorrichtung nach einem der Ansprüche 7 oder 8, **dadurch gekennzeichnet,** daß die Kulissenführung (214) außerhalb eines Endbereiches (224) eine eine Schwenkbewegung hindernde Zwangsführung des Riegelorgans (205) ausbildet.

10. Verschlußvorrichtung nach Anspruch 9, **dadurch gekennzeichnet,** daß die Schwenkachse (206) des Riegelorgans (205) von einem zumindest einseitig abgeflachten Achskörper (225) gebildet ist, der in der Kulissenführung (214) geführt ist, und daß die Kulissenführung (214) einenends mit einer Aufweitung (224) versehen ist, deren Durchmesser zumindest dem des Achskörpers (225) in nicht abgeflachten Bereichen entspricht.

11. Verschlußvorrichtung nach einem oder mehreren der Ansprüche 1 bis 10, **dadurch gekennzeichnet,** daß die Länge des Antriebsgestänges (3;103;203) verstellbar ist.

12. Verschlußvorrichtung nach einem oder mehreren der Ansprüche 1 bis 11, **dadurch gekennzeichnet,** daß neben den Verschlußelementen (2;102;202) Mittel (33) zur Zentrierung des Verdecks (12) an dem Karosserierahmenteil (13) vorgesehen sind.

13. Verschlußvorrichtung nach einem oder mehreren der Ansprüche 1 bis 12, **dadurch gekennzeichnet,** daß in Verschlußstellung das das Widerlager (19;119;219) umgreifende Hakenende (20;120;220) eine im wesentlichen horizontale Stellung einnimmt und eine Aufnahmeaussparung (43;143;243) zur arretierenden Anlage an das Widerlager (19;119;219) aufweist.

14. Verschlußvorrichtung nach einem oder mehreren der Ansprüche 1 bis 13, **dadurch gekennzeichnet,** daß das zentrale Betätigungsorgan (4;104;204) als Handgriff (52) ausgebildet ist, der in einer zumindest das oder die Verschlußelemente (2;102;202) in Schließstellung haltenden Ausgangslage über ein Verriegelungselement (50,60) blockiert ist.

15. Verschlußvorrichtung nach Anspruch 14, **dadurch gekennzeichnet,** daß der Handgriff (52) zumindest um eine horizontale Achse (51) verschwenkbar ist, in Ausgangsposition eine im wesentlichen horizontale Stellung einnimmt, und das Verriegelungselement (50) als ein die Verschwenkung des Handgriffs (52) blockierendes Bauteil ausgebildet ist.

16. Verschlußvorrichtung nach einem der Ansprüche 14 oder 15, **dadurch gekennzeichnet,** daß ein Betätigungselement (56) den Handgriff (52) durchdringt und gegenüber diesem federnd gelagert ist, einenends eine Drucktaste (58) aufweist und anderenends - in Ausgangsposition des Betätigungsorganes - in das ebenfalls federnd gelagerte Verriegelungselement (50) eingreift und daß durch eine gegen die Federkräfte gerichtete Bewegung das Verriegelungselement (50) in eine Freigabeposition bewegbar ist.

17. Verschlußvorrichtung nach Anspruch 16, **dadurch gekennzeichnet,** daß die das Verriegelungselement (50) in Freigabeposition bringende Bewegung eine im wesentlichen der Richtung der Fahrzeuglängsachse folgende Druckbewegung in Fahrtrichtung ist.

18. Verschlußvorrichtung nach einem oder mehreren der Ansprüche 14 bis 17, **dadurch gekennzeichnet,** daß der Handgriff (52) als ein um eine horizontale Achse (51) verschwenkbares und in zumindest ausgeschwenkter Position um eine im wesentlichen vertikale Achse (66) drehbares Teil ausgebildet ist.

19. Verschlußvorrichtung nach Anspruch 18, **dadurch gekennzeichnet,** daß ein die Drehbewegung um die vertikale Achse (66) über einen Teilbereich des Schwenkwinkels des Handgriffes (52) um die horizontale Schwenkachse (51) sperrendes Blockierungsmittel (60) vorgesehen ist.

20. Verschlußvorrichtung nach Anspruch 19, **dadurch gekennzeichnet,** daß bei maximaler Ausschwenkung des Handgriffes (52) um die horizontale Schwenkachse (51) die Drehung des Handgriffes (52) um die vertikale Achse (66) freigegeben ist.

21. Verschlußvorrichtung nach einem oder mehreren der Ansprüche 19 oder 20, **dadurch gekennzeichnet,** daß das Blockierungsmittel (60) als vertikal beweglicher Stift vorgesehen ist, dessen Vertikalbewegung durch den Schwenkwinkel des Handgriffs (52) um die horizontale Achse (51) gesteuert ist.

22. Verschlußvorrichtung nach Anspruch 21, **dadurch gekennzeichnet**, daß das untere Ende des Blockierungsmittels (60) von einem Teilbereich (65) oder einer Anformung des Handgriffs (52) nach Art eines Nockens gesteuert ist.

23. Verschlußvorrichtung nach einem oder mehreren der Ansprüche 19 bis 22, **dadurch gekennzeichnet,** daß das Blockierungsmittel (60) in seinem oberen Bereich ein in Anpassung an die Form einer Ausnehmung (64) eines Widerlagers (63) ausgebildetes, bezüglich der vertikalen Achse (66) nicht isotrop geformtes Endstück (61) ausbildet, an das sich ein bezüglich der vertikalen Achse isotrop geformtes Halsstück (62) anschließt.

## Claims

1. A locking device for a convertible soft top (12), particularly of motor vehicles, which can be separably mounted on a bodywork frame part (13), with at least two lateral locking elements (2; 102; 202) or abutments (19; 119; 219) associated with the bodywork frame part (13), whereby the locking elements (2; 102; 202) comprise in each case a locking member (5; 105; 205) adapted for movement with the abutment (19; 119; 219) in the engaged and/or disengaged position and constructed as a pivotable hook-shaped part and are connected via a drive linkage (3; 103; 203) with an actuating member (4; 104; 204), the locking members (5; 105; 205) being respectively pivotable about a pivot axis (6; 106; 206) which, when the top is in the closed position, extends substantially horizontally and parallel with the longitudinal axis through the vehicle, characterised in that during pivoting of the hook-shaped part (5; 105; 205), the pivot axis (6; 106; 206) is maintained stationary vis-a-vis the said part and in that a force-deflecting transmission lever (8; 108; 208) is disposed between the hook-shaped part and the drive linkage (3; 103; 203).

2. A locking device according to claim 1, characterised in that the transmission lever (8; 208) is constructed as a pivot lever which points radially outwards from while being connected rigidly to the pivot axis (6; 206) and is engaged by the drive linkage (3; 203) through a ball joint (9; 209).

3. A locking device according to one of claims 1 or 2, characterised in that in the region of the force-deflection between drive linkage (103; 203) and locking member (105; 205) there is a single link guide (114; 214) and in that at least the transmission lever (108; 208) is guided in the link guide (114; 214).

4. A locking device according to claim 3, characterised in that the transmission lever (108) on the locking member (105) is pivotally mounted on an articulating spindle (116), which is disposed at a distance from the pivot axis (106) of the locking member (105) and whereby the transmission lever (108) is at the other end guided in the link guide (114) via a guide spindle (117).

5. A locking device according to claim 4, characterised in that the imaginary connecting line between the pivot axis (106) and the articulating axis (116) opposite the imaginary line formed by the pivot axis (106) and the guide spindle (117) at the transmission lever (108) forms an open angle (α) which is situated in the same direction as the pivot angle (β) of the locking member (105).

6. A locking device according to claim 5, characterised in that the link guide (114) is constructed substantially parallel with the transverse axis through the vehicle and in that the outwardly directed end piece (115) of the drive linkage (103) is guided in this link guide (114).

7. A locking device according to claim 3, characterised in that the transmission lever (208) is disposed rigidly on the locking member (205) and is at the other end articulated on the drive linkage (203).

8. A locking device according to claim 7, characterised in that a ball joint (209) is provided to articulate the drive linkage (203) on the transmission lever (208).

9. A locking device according to one of claims 7 or 8, characterised in that the link guide (214) constitutes a positive guide for the locking member (205) which is outside the end zone (224) and which prevents a pivoting movement.

10. A locking device according to claim 9, characterised in that the pivot axis (206) of the locking member (205) is formed by a spindle member (225) which is flattened on at least one side and which is guided in the link guide (214) and in that the link guide (214) has at one end a widened-out part (224), the diameter of which corresponds at least to that of the spindle member (225) in those areas which are not flattened.

11. A locking device according to one or more of claims 1 to 10, characterised in that the length of the drive linkage (3; 103; 203) is adjustable.

12. A locking device according to one or more of claims 1 to 11, characterised in that in addition to the locking elements (2; 102; 202), means are provided for centring the hood (12) on the bodywork frame part (13).

13. A locking device according to one or more of claims 1 to 12, characterised in that in the locking position the hook end (20; 120; 220) which engages around the abutment (19; 119; 219) occupies a substantially horizontal position and has an accommodating recess (43; 143; 243) to arrest it on the abutment (19; 119; 219).

14. A locking device according to one or more of claims 1 to 13, characterised in that the central actuating member (4; 104; 204) is constructed as a handle (52) which, by means of an interlocking element (50; 60) is held in a starting position which maintains at least the locking element(s) (2; 102; 202) in the closed position.

15. A locking device according to claim 14, characterised in that the handle (52) is adapted to be pivoted at least about a horizontal axis (51) and in that, in the starting position, it assumes a substantially horizontal position, and in that the locking element (50) is constructed as a component which blocks pivoting of the handle (52).

16. A locking device according to one of claims 14 or 15, characterised in that an actuating element (56) passes through the handle (52) and is resiliently mounted in respect thereof has a push button (58) at one end and, at the other - in the starting position of the actuating member - it engages the likewise resiliently mounted locking element (50) and in that the locking element (50) can be moved into a release position by a movement directed against the spring forces.

17. A locking device according to claim 16, characterised in that the movement which brings the locking element (50) into the release position is a thrust movement in the direction of travel and which substantially follows the direction of the longitudinal axis through the vehicle.

18. A locking device according to one or more of claims 14 to 17, characterised in that the handle (52) is constructed as a part which is adapted to pivot about a horizontal axis and which, at least on the outwardly pivoted position, is rotatable about a substantially vertical axis (66).

19. A locking device according to claim 18, characterised in that a blocking means (60) is provided which prevents the rotary movement about a vertical axis (66) over a portion of the pivoting angle of the handle (52) about the horizontal pivot axis (51).

20. A locking device according to claim 19, characterised in that at maximum deflection of the handwheel (52) about the horizontal pivot axis (51), rotation of the handle (52) about the vertical axis (66) is cleared.

21. A locking device according to one or more of claims 19 or 20, characterised in that the locking means (60) is in the form of a vertically movable pin, the vertical movement of which is controlled by the angle through which the handle (52) rotates about the horizontal axis (51).

22. A locking device according to claim 21, characterised in that the bottom end of the locking means (60) is controlled by a portion (65) or a portion formed on the handle (52) in the manner of a cam.

23. A locking device according to one or more of claims 19 to 22, characterised in that the upper part of the locking means (60) has, matching the shape of a recess (64) in an abutment (63), an end piece (61) which is not isotropic in relation to the vertical axis (66) and adjacent to which there is a neck piece (62) which is isotropically formed in relation to the vertical axis.

## Revendications

1. Dispositif de verrouillage pour une capote de cabriolet (12) qui se fixe sur une partie de carrosserie (13), notamment de véhicules automobiles, comprenant au moins deux éléments de verrouillage (2, 102, 202) prévus sur le côté de la capote (12) ou la partie de carrosserie (13) ou encore des appuis complémentaires (19, 119, 219),
les éléments de verrouillage (2, 102, 202) comprenant chaque fois au moins un organe de verrouillage (5, 105, 205) réalisé comme pièce en forme de crochet basculant et mobile pour venir en prise ou se dégager de l'appui complémentaire (19, 119, 219), et ces éléments de verrouillage étant reliés à un organe de manoeuvre (4, 104, 204) par une tringle d'entraînement (3, 103, 203),
les organes de verrouillage (5, 105, 205) pouvant basculer chacun autour d'un axe de basculement (6, 106, 206) essentiellement horizontal et parallèle à l'axe longitudinal du véhicule lorsque la capote est en position de fermeture,
caractérisé en ce que
l'axe de basculement (6, 106, 206) est maintenu fixe par rapport au crochet (5, 105, 205) pendant son basculement, et un levier de transmission (8, 108, 208) de déviation de force est prévu entre le crochet et la tringle d'entraînement (3, 103, 203).

2. Dispositif de verrouillage selon la revendication 1,
caractérisé en ce que
le levier de transmission (8, 208) est relié solidairement à l'axe de basculement (6, 206) et constitue un levier basculant qui s'écarte radialement par rapport à cet axe en étant relié à la tringle d'entraînement (3, 203) par une articulation à rotule (9, 209).

3. Dispositif de verrouillage selon l'une quelconque des revendications 1 ou 2,
caractérisé en ce que
dans la zone du renvoi de la force entre la tringle d'entraînement (103, 203) et l'organe de verrouillage (105, 205) il comporte une unique coulisse de guidage (114, 214), et au moins le levier de transmission (108, 208) est guidé dans la coulisse de guidage (114, 214).

4. Dispositif de verrouillage selon la revendication 3,
caractérisé en ce que
le levier de transmission (108) est monté basculant par un axe d'articulation (116) sur l'organe de verrouillage (105) et cet axe d'articulation (116) est écarté de l'axe de basculement (106) de l'organe de verrouillage (105), l'autre extrémité du levier de transmission (108) étant guidée dans la coulisse de guidage (114) par un axe de guidage (117).

5. Dispositif de verrouillage selon la revendication 4,
caractérisé en ce que
la ligne qui passe par l'axe de basculement (106) et l'axe d'articulation (116) fait un angle d'ouverture (α) par rapport à la ligne passant par l'axe de basculement (106) et l'axe de guidage (117) du levier de transmission (108), cet angle étant dans le même sens que l'angle de basculement (β) de l'organe de verrouillage (105).

6. Dispositif de verrouillage selon la revendication 5,
caractérisé en ce que
la coulisse de guidage (114) est essentiellement parallèle à l'axe transversal du véhicule et la pièce d'extrémité (115) de la tringle d'entraînement (103), dirigée vers l'extérieur, est guidée dans cette coulisse de guidage (114).

7. Dispositif de verrouillage selon la revendication 3,
caractérisé en ce que
le levier de transmission (208) est monté rigidement sur l'organe de verrouillage (205) et son autre extrémité est reliée à la tringle d'entraînement (203).

8. Dispositif de verrouillage selon la revendication 7,
caractérisé par
une articulation à rotule (209) articulant la tringle d'entraînement (203) au levier de transmission (208).

9. Dispositif de verrouillage selon l'une quelconque des revendications 7 ou 8,
caractérisé en ce que
la coulisse de guidage (214) constitue, en dehors de sa zone d'extrémité (224), un guidage forcé de l'organe de verrouillage (205) interdisant son mouvement de basculement.

10. Dispositif de verrouillage selon la revendication 9,
caractérisé en ce que
l'axe de basculement (206) de l'organe de verrouillage (205) est formé par un corps d'axe (225) aplati sur au moins un côté, et qui est guidé dans la coulisse (214), et
la coulisse de guidage (214) comporte à une extrémité une partie élargie (224) dont le diamètre correspond au moins à celui du corps d'axe (225) pour sa partie non aplatie.

11. Dispositif de verrouillage selon l'une ou plusieurs des revendications 1 à 10,
caractérisé en ce que
la longueur de la tringle d'entraînement (3, 103, 203) est réglable.

12. Dispositif de verrouillage selon l'une ou plusieurs des revendications 1 à 11,
caractérisé en ce que
la partie de carrosserie (13) comporte des moyens (33) pour centrer la capote (12) en plus des éléments de verrouillage (2, 102, 202).

13. Dispositif de verrouillage selon l'une ou plusieurs des revendications 1 à 12,
caractérisé en ce qu'
en position de verrouillage, l'extrémité de crochet (20, 120, 220) qui entoure l'appui complémentaire (19, 119, 219) prend une position essentiellement horizontale et comporte une découpe de réception (43, 143, 243) pour s'appuyer en blocage contre l'appui complémentaire (19, 119, 219).

14. Dispositif de verrouillage selon l'une ou plusieurs des revendications 1 à 13,
caractérisé en ce que
l'organe central de manoeuvre (4, 104, 204) est réalisé en forme de poignée (52) bloquée par un élément de verrouillage (50, 60) dans une position de repos qui maintient au moins le ou les élément(s) de verrouillage (2, 102, 202) en position de fermeture.

15. Dispositif de verrouillage selon la revendication 14,
caractérisé en ce que
la poignée (52) peut basculer au moins autour d'un axe horizontal (51) en prenant une position essentiellement horizontale pour la position de repos, et l'élément de verrouillage (50) est en forme de pièce bloquant le mouvement de basculement de la poignée (52).

16. Dispositif de verrouillage selon l'une quelconque des revendications 14 ou 15,
caractérisé en ce qu'
un élément d'actionnement (56) traverse la poignée (52) et est monté élastiquement par rapport à celle-ci, en comportant à une extrémité un bouton poussoir (58) et dont l'autre extrémité (en position de repos de l'organe d'actionnement pénètre) dans l'élément de verrouillage (50) également monté à ressort, et
un mouvement dirigé contre la force développée par le ressort déplace l'élément de verrouillage (50) en position de libération.

17. Dispositif de verrouillage selon la revendication 16,
caractérisé en ce que
le mouvement qui met l'élément de verrouillage (50) en position de libération est un mouvement de poussée essentiellement dans la direction de l'axe longitudinal du véhicule et dans le sens du déplacement.

18. Dispositif de verrouillage selon l'une ou plusieurs des revendications 14 à 17,
caractérisé en ce que
la poignée (52) est une pièce basculant autour d'un axe horizontal (51) et qui peut tourner autour d'un axe essentiellement vertical (66) lorsque cette poignée est dans une position basculée.

19. Dispositif de verrouillage selon la revendication 18,
caractérisé par
un moyen de blocage (60) qui bloque le mouvement de rotation autour de l'axe vertical (66) sur une partie de la plage de l'angle de basculement de la poignée (52) autour de l'axe de basculement horizontal (51).

20. Dispositif de verrouillage selon la revendication 19,
caractérisé en ce que
la rotation de la poignée (52) autour de l'axe vertical (66) est libérée lorsque la poignée (52) est basculée au maximum autour de son axe de basculement horizontal (51).

21. Dispositif de verrouillage selon au moins l'une quelconque des revendication 19 ou 20,
caractérisé en ce que
le moyen de blocage (60) est une broche mobile verticalement dont le mouvement vertical est commandé par l'angle de basculement de la poignée (52) autour de l'axe horizontal (51).

22. Dispositif de verrouillage selon la revendication 21,
caractérisé en ce que
l'extrémité inférieure de la broche de blocage (60) est commandée par une zone partielle (65) ou par un bossage réalisé sur la poignée (52) à la manière d'une came.

23. Dispositif de verrouillage selon l'une quelconque des revendications 19 à 22,
caractérisé en ce que
le moyen de blocage (60) présente, dans sa zone supérieure, une pièce d'extrémité (61) de forme non isotrope par rapport à l'axe vertical (66) et adaptée à la forme d'une cavité (64) d'un appui complémentaire (63), cette pièce d'extrémité étant raccordée à un col (62) de forme isotrope par rapport à l'axe vertical.
